# EUROPÄISCHE PATENTSCHRIFT

(11) **EP 1 681 266 B1**
(45) Veröffentlichungstag und Bekanntmachung des Hinweises auf die Patenterteilung: **17.11.2010**
(21) Anmeldenummer: 05005930.2
(22) Anmeldetag: 18.03.2005
(51) Int. Cl.: C01B 33/18, C09K 3/10, C08L 83/00

(54) **Pyrogen hergestellte Siliciumdioxidpulver und dieses Pulver enthaltende Silikondichtmasse**
Pyrogenic silica and silicone sealant containing the same
Silice pyrogénique et masse d'étanchéité à base de silicone la contenant

(30) Priorität: 12.01.2005 DE 102005001409
(43) Veröffentlichungstag der Anmeldung: 19.07.2006
(73) Patentinhaber: Evonik Degussa GmbH, 45128 Essen (DE)
(72) Erfinder: Schumacher, Kai, Dr., 65719 Hofheim (DE); Kerner, Dieter, Dr., 63450 Hanau (DE); Diener, Uwe, 63538 Grosskrotzenburg (DE); Scholz, Mario, 63584 Gründau (DE)

(56) Entgegenhaltungen:
- EP-A- 1 486 461
- WO-A-2005/095503
- DE-A1- 10 258 858

## Beschreibung

Die Erfindung betrifft ein pyrogen hergestelltes Siliciumdioxidpulver, dessen Herstellung und Verwendung. Die Erfindung betrifft weiterhin eine Silikondichtmasse, welche das pyrogen hergestellte Siliciumdioxidpulver enthält.

Die Flammenhydrolyse zur Herstellung von Siliciumdioxid ist ein seit langem bekanntes, großtechnisch durchgeführtes Verfahren. Bei diesem Verfahren wird ein verdampftes oder gasförmiges hydrolysierbares Siliciumhalogenid mit einer Flamme vermengt, die durch Verbrennung eines wasserbildenden, Wasserstoff enthaltenden Brennstoffs und eines sauerstoffhaltigen Gases gebildet worden ist. Die Verbrennungsflamme stellt dabei Wasser für die Hydrolyse des Siliciumhalogenides und genügend Wärme zur Hydrolysenreaktion zur Verfügung. Das in den Restgasen der Reaktion mitgetragene Siliciumdioxidpulver wird üblichen Kühl- und Feststofftrennverfahren unterworfen. Gewöhnlich wird Siliciumtetrachlorid eingesetzt. Es ist jedoch auch bekannt, Dichlorsilan, Trichlorsilan einzusetzen. Beim Einsatz von kohlenstoffhaltigen Einsatzstoffen, wie beispielsweise Methyltrichlorsilan, Dimethyldichlorsilan, Methyldichlorsilan, Dibutyldichlorsilan, Äthyltrichlorsilan, Propyltrichlorsilan findet zusätzlich ein Oxidationsprozess zur Überführung des Kohlenstoffes in Kohlendioxid statt.

In Folge wird ein Siliciumdioxidpulver, welches bei einem Verfahren bei dem beide Reaktionstypen, nämlich Flammenhydrolyse und Oxidation, ablaufen, gebildet wird, als ein pyrogen hergestelltes Siliciumdioxid bezeichnet.

Bei der Reaktion werden zunächst hochdisperse, nicht poröse Primärpartikel gebildet, die im weiteren Reaktionsverlauf zu Aggregaten zusammenwachsen und diese sich weiter zu Agglomeraten zusammenlagern können. Die BET-Oberfläche dieser Primärpartikel liegt in der Regel zwischen 5 und 600 m²/g. Das Pulver weist auf seiner Oberfläche freie Hydroxylgruppen auf.

Das so hergestellte Siliciumdioxidpulver findet in vielen Anwendungsbereichen Verwendung. Von besonderer Bedeutung ist die Verwendung zur Rheologiesteuerung in Siliconkautschuken. Aufgrund seiner ausgezeichneten Verdickungswirkung wird pyrogen hergestelltes Siliciumdioxidpulver seit langem in Siliconkautschuken eingesetzt. Neben der Verdickungswirkung kommt auch der Einarbeitbarkeit in das Siliconpolymer große Bedeutung zu. Bei Siliciumdioxidpulvern nach dem Stand der Technik liegt oft nur einer der Parameter Verdickungswirkung und Einarbeitbarkeit in dem gewünschten Bereich. Darüberhinaus gilt, dass auch die einzelnen Parameter, Verdickung und Einarbeitbarkeit, verbesserungswürdig sind.

Das Dokument EP 1 486 461 offenbart ein "flammenhydrolytisch hergestelltes Siliciumdioxidpulver mit einer BET-Oberfläche zwischen 10 und 600 m2/g" (Sieh Zusammenfassung und Patentanspruch 1).

Dazu beschreibt das Dokument WO 2005/095503 die Verwendung von pyrogen hergestelltem Siliciumdioxid mit einer BET-Oberfläche von 150+/-15 m2/g.

Aufgabe der Erfindung ist es daher ein Siliciumdioxidpulver bereitzustellen, welches ein hohe Verdickungswirkung bei gleichzeitiger niedriger Einarbeitungszeit und guter Dispergierbarkeit in Polymere, insbesondere Siliconpolymere, aufweist. Zudem sollen die Siliconpolymere nach Einarbeitung des Siliciumdioxidpulvers eine gute Oberflächenbeschaffenheit aufweisen.

Eine weitere Aufgabe der Erfindung ist ein Verfahren zur Herstellung des Siliciumdioxidpulvers bereitzustellen.

Weiterhin ist es Aufgabe der Erfindung eine Silicondichtmasse bereitzustellen, die das erfindungsgemäße Siliciumdioxidpulver enthält.

Gegenstand der Erfindung ist ein pyrogen hergestelltes Siliciumdioxidpulver in Form von Aggregaten von Primärpartikeln, welches
- eine BET-Oberfläche von 150 ± 15 m²/g besitzt und bei dem die Aggregate
- eine mittlere Fläche von 12000 - 20000 nm²,
- einen mittleren, äquivalenten Kreisdurchmesser (ECD = Equivalent Circle Diameter) von 90 - 120 nm und
- einen mittleren Umfang von 1150 - 1700 nm aufweisen.

Dabei wird die BET-Oberfläche bestimmt nach DIN 66131.

Die Aggregatgrößen werden durch Bildanalyse mittels eines TEM Gerätes der Fa. Hitachi H 7500 und einer CCD-Kamera MegaView II, der Fa. SIS bestimmt. Die Bildvergrößerung zur Auswertung beträgt 30000:1 bei einer Pixeldichte von 3,2 nm. Die Anzahl der ausgewerteten Teilchen ist größer als 1000. Die Präparation erfolgt gemäss ASTM3849-89. Die untere Schwellwertgrenze in bezug auf Detektion liegt bei 50 Pixeln.

Die BET-Oberfläche kann bevorzugt 150 ± 10 m²/g und besonders bevorzugt 150 ± 5 m²/g sein.

Weiterhin kann ein erfindungsgemäßes pyrogen hergestelltes Siliciumdioxidpulver bevorzugt sein, bei dem die Aggregate
- eine mittlere Fläche von 12500 - 14500 nm²,
- einen mittleren, äquivalenten Kreisdurchmesser von 95 - 110 nm und
- einen mittleren Umfang von 1250 - 1450 nm aufweisen.

Weiterhin kann ein erfindungsgemäßes pyrogen hergestelltes Siliciumdioxidpulver bevorzugt sein, bei dem der maximale Aggregatdurchmesser zwischen 170 und 240 nm und der minimale Aggregatdurchmesser zwischen 100 und 160 nm liegt.

Weiterhin kann ein erfindungsgemäßes pyrogen hergestelltes Siliciumdioxidpulver bevorzugt sein, bei dem der Chloridgehalt kleiner als 250 ppm ist. Besonders bevorzugt ist ein Chloridgehalt von weniger als 50 ppm.

Weiterhin kann ein erfindungsgemäßes pyrogen hergestelltes Siliciumdioxidpulver bevorzugt sein, bei dem der Kohlenstoffgehalt kleiner als 100 ppm ist. Besonders bevorzugt ist ein Kohlenstoffgehalt von weniger als 25 ppm.

Ein weiterer Gegenstand der Erfindung ist ein Verfahren zur Herstellung des erfindungsgemäßen Siliciumdioxidpulvers bei dem man
- ein Gemisch von Siliciumverbindungen, getrennt oder gemeinsam, verdampft, die Dämpfe mittels eines Traggases in eine Mischkammer überführt, mit
- SiCl₄ als erster Komponente mit einem Anteil 60 bis 95 Gew.-% bezogen auf das Gemisch, und
- einer zweiten Komponente ausgewählt aus der Gruppe umfassend H₃SiCl, H₂SiCl₂, HSiCl₃, CH₃SiCl₃, (CH₃)₂SiCl₂, (CH₃)₃SiCl, (n-C₃H₇)SiCl₃, mit einem Anteil von 5 bis 40 Gew.-%, bezogen auf das Gemisch,
- und getrennt hiervon ein Brenngas, Primärluft, die gegebenenfalls mit Sauerstoff angereichert und/oder vorerhitzt sein kann, in die Mischkammer überführt,
- das Gemisch aus dem Dampf der Siliciumchloride, Brenngas und Primärluft in einem Brenner zündet und die Flamme in eine Reaktionskammer hinein verbrennt,
- Sekundärluft, die die Flamme umgibt, in die Reaktionskammer einbringt, wobei das Verhältnis von Sekundärluft/Primärluft in einem Bereich von 0,05 bis 3, bevorzugt 0,15 bis 2, liegt,
- anschließend den Feststoff von gasförmigen Stoffen abtrennt, und nachfolgend den Feststoff mit Wasserdampf bei 250°C bis 750°C behandelt,
   wobei
- die Gesamtmenge an Sauerstoff mindestens ausreichend ist zur vollständigen Verbrennung des Brenngases und der Siliciumverbindungen und
- die Menge der Einsatzstoffe bestehend aus Siliciumverbindungen, Brenngas, Primärluft und Sekundärluft so gewählt ist, dass eine adiabate Flammentemperatur T_{ad} von 1670 bis 1730°C resultiert, mit
   T_{ad} = Temperatur Einsatzstoffe + Summe der Reaktionsenthalpien der Teilreaktionen/ Wärmekapazität der Stoffe, die die Reaktionskammer verlassen, umfassend Siliciumdioxid, Wasser, Chlorwasserstoff, Kohlendioxid, Sauerstoff, Stickstoff, und gegebenenfalls des Traggases, wenn dieses nicht Luft oder Stickstoff ist,
wobei die spezifische Wärmekapazität dieser Stoffe bei 1000°C zugrunde gelegt wird.

Die spezifischen Wärmekapazitäten können beispielsweise mit Hilfe des VDI-Wärmeatlas (Kapitel 7.1 bis 7.3 und 3.7, 8. Auflage) ermittelt werden.

Die Umsetzung der Siliciumverbindungen in Gegenwart von Sauerstoff und eines Brenngases liefert Siliciumdioxid, Wasser, Salzsäure und bei kohlenstoffhaltigen Siliciumverbindungen und/oder kohlenstoffhaltigen Brenngasen Kohlendioxid. Die Reaktionsenthalpien dieser Reaktionen können mittels dem Fachmann bekannter Standardwerken berechnet werden.

In Tabelle 1 sind einige ausgesuchte Werte von Reaktionsenthalpien der Umsetzung von Siliciumverbindungen in Gegenwart von Wasserstoff und Sauerstoff gegeben.

**Tabelle 1: Reaktionsenthalpien**

| | KJ/mol |
|---|---|
| H₂ | -241,8 |
| SiCl₄ | -620,1 |
| SiHCl₃ | -659,4 |
| SiH₂Cl₂ | -712,3 |
| n-C₃H₇SiCl₃ | -2700,2 |
| CH₃SiCl₃ | -928,3 |
| (CH₃)₃SiCl | -2733,8 |

Besonders bevorzugt können Methyltrichlorsilan (MTCS, CH₃SiCl₃), Trichlorsilan (TCS, SiHCl₃) und/oder n-Propyltrichlorsilan (PTS, n-C₃H₇SiCl₃) eingesetzt werden.

Als Brenngase eignen sich Wasserstoff, Methan, Ethan, Propan und/oder Erdgas, wobei Wasserstoff bevorzugt ist.

Die Temperatur der Einsatzstoffe ist nicht limitiert, solange sie oberhalb der Siedetemperatur der höchst siedenden Siliciumverbindung liegt. Als vorteilhaft hat sich eine Temperatur der Einsatzstoffe von 90°C ± 40°C erwiesen.

Es kann ferner von Vorteil sein, wenn die Austrittsgeschwindigkeit des Reaktionsgemisches aus der Mischkammer in die Reaktionskammer 10 bis 80 m/s ist.

Ein weiterer Gegenstand der Erfindung ist die Verwendung des erfindungsgemäßen pyrogen hergestellten Siliciumdioxidpulvers als Füllstoff in Kautschuk und Kunststoffen, zur Einstellung der Rheologie in Farben und Lacken, als Träger für Katalysatoren und zur Herstellung von Dispersionen.

Ein weiterer Gegenstand der Erfindung ist eine Silicondichtmasse, welche das erfindungsgemäße Siliciumdioxidpulver enthält.

Bevorzugterweise kann es sich dabei um einen RTV-1- oder RTV-2-Siliconkautschuk handeln. Die Silicondichtmasse mit 8 Gew.-% eines erfindungsgemäßen Siliciumdioxidpulvers kann bevorzugt eine Viskosität von mindestens 120 Pas aufweisen.

### Beispiele

Die BET-Oberfläche wird nach DIN 66131 bestimmt.

Bestimmung des wet-in-Verhaltens: In einem 200 ml PE-Becher werden 100 g Silopren C 5 (Bayer AG) vorgelegt. Der Becher wird passend in den Einsatz des Temperiergefäßes eines Dissolvers eingesetzt. Der Dissolver mit 30 mm Scheibendurchmesser wird auf eine Drehzahl auf 500 Upm eingestellt und 2 g des Siliciumdioxidpulvers auf die Polymeroberfläche aufgegeben und die Stoppuhr gestartet. Es wird die Zeit gemessen, die benötigt wird, um das Siliciumdioxidpulver mit dem Polymer zu homogenisieren.

### Herstellung von Siliciumdioxidpulvern

### Beispiel 1:

100 kg/h Siliciumtetrachlorid, und 5 kg/h Trichlorsilan und 35 kg/h Methyltrichlorsilan werden verdampft und mittels Stickstoff in die Mischkammer eines Brenners überführt. Gleichzeitig werden 35 Nm³/h Wasserstoff und 155 Nm³/h Primärluft in die Mischkammer gegeben. Das Gemisch weist eine Temperatur von 90°C auf. Es wird gezündet und in einer Flamme in eine Reaktionskammer hinein verbrannt. Zusätzlich werden 25 Nm³/h Sekundärluft, die die Flamme umgibt, in die Reaktionskammer eingebracht.

Die Reaktionsgase und das entstandene Siliciumdioxid werden durch Anlegen eines Unterdruckes durch ein Kühlsystem gesaugt und dabei auf Werte zwischen 100 und 160°C abgekühlt. In einem Filter oder Zyklon wird der Feststoff vom Abgasstrom abgetrennt und nachfolgend bei einer Temperatur von 550°C mit Wasserdampf behandelt.

Die Beispiele 2 bis 11 werden analog durchgeführt.

Tabelle 2 gibt die Einsatzstoffe und Mengen der Beispiele 1 bis 11 wieder.

Tabelle 3 zeigt die berechneten Werte für Reaktionsenthalpie, Wärmekapazität und adiabate Flammentemperatur.

Tabelle 4 zeigt analytische Daten der hergestellten Siliciumdioxidpulver, sowie zweier kommerziell erhältlicher pyrogen hergestellter Siliciumdioxidpulver (Beispiele 12 und 13).

Die Beispiele 1 bis 5 ergeben erfindungsgemäße Pulver. Die Beispiele 5 bis 10 sind Vergleichsbeispiele.

In Beispiel 2 werden drei Siliciumkomponenten eingesetzt.

In den Beispielen 3 und 4 werden hohe, beziehungsweise niedrige Anteile der ersten Siliciumkomponente Siliciumtetrachlorid eingesetzt.

In Beispiel 5 wird innerhalb des beanspruchten Bereiches ein hohes Verhältnis Sekundärluft/Primärluft eingestellt.

In den Beispielen 6 und 7 sind Einstellungen gewählt, die zu einer adiabaten Flammentemperatur ausserhalb des beanspruchten Bereiches führen.

In Beispiel 8 wird nur eine Siliciumverbindung (SiCl₄) eingesetzt.

In Beispiel 9 ist das Verhältnis von Siliciumtetrachlorid zu den weiteren Siliciumverbindungen ausserhalb des beanspruchten Bereiches.

In Beispiel 10 wird keine Sekundärluft zugeführt.

In Beispiel 11 ist das Verhältnis Sekundärluft/Primärluft ausserhalb des beanspruchten Bereiches.

### Herstellung einer Silikondichtmasse

Geräte: Der Planeten-Dissolver erfüllt folgende Anforderungen: Das Rührgefäß fasst ca. 2 Liter und ist mit einem Doppelmantel mit Kühlwasseranschluss versehen. Planetenantrieb und Dissolverantrieb sind unabhängig. Eine Vakuumpumpe ist vorhanden. Eine zusätzliche Faßpresse erleichtert das Abfüllen.

Formulierung:
62,4 Gew.-% Siliconpolymer (Silopren E 50),
24,6 Gew.-% Silconöl (Siliconöl M 1000),
4,0 Gew.-% Acetat-Vernetzer (Vernetzer AC 3034),
1,0 Gew.-% Haftvermittler (AC 3001)
0,01 Gew.-%Katalysator Dibutylzinndiacetat, alle GE Bayer Silicones, und
8,0 Gew.-% Siliciumdioxidpulver

Durchführung: 468,0 g Siliconpolymer, 184,5 g Siliconöl, 30,0 g Vernetzer, 7,5 g Haftvermittler werden in ein Rührgefäß eingewogen und 1 Minute bei einer Geschwindigkeit von 50 min⁻¹ mittels Planetenrührwerk und von 500 min⁻¹ mittels Dissolver homogenisiert.

Danach werden 60 g Siliciumdioxidpulver bei der gleichen Geschwindigkeit in 2 Stufen zu je 30 g eingearbeitet.

Sobald das Siliciumdioxidpulver vollständig benetzt ist, wird ein Vakuum von ca. 200 mbar angelegt und 5 Minuten bei 100 min⁻¹ des Planetenrührwerks und 2000 min⁻¹ des Dissolvers unter Kühlung dispergiert. Anschließend wird Dibutylzinndiacetat zugegeben und weitere 5 Minuten dispergiert.

Mit einer Faßpresse wird die Silicondichtmasse in Aluminium-Tuben abgefüllt.

Bestimmung der Viskosität der Silicondichtmasse: Mit einem Rheometer wird mittels eines Meßsystemes (Kegel/Platte) eine Fließkurve aufgenommen, die Viskosität und die Fließgrenze ermittelt. Aus der Fließkurve wird die Viskosität bei 10 s⁻¹ (Scherrate) abgelesen. Die Viskosität beschreibt die Eigenschaft eines Stoffes, unter Einwirkung einer Spannung zu fließen und irreversibel deformiert zu werden. Da die Viskosität bei einem nicht-newtonschen Fließverhalten von der Scherrate abhängig ist, wird sie bei einer definierten Scherrate von 10 s⁻¹ angegeben.

Die Beispiele zeigen, dass das erfindungsgemäße Siliciumdioxidpulver aus den Beispielen 1 bis 5 deutlich geringere Benetzungszeiten und eine deutlich höhere Verdickungswirkung aufweisen, als die Muster aus den Vergleichsbeispielen 6 bis 13.

Weiterhin zeigen die Beispiele, dass die mittlere Aggregatfläche, der mittlere ECD, der mittlere Aggregatumfang, der mittlere maximaler Aggregatdurchmesser und der mittlere minimaler Aggregatdurchmesser der erfindungsgemäßen Siliciumdioxidpulver kleiner sind als die entsprechenden Werte der Vergleichsbeispiele, mit Ausnahme des kommerziell erhältlichen Siliciumdioxidpulvers aus Beispiel 13. Hier ist die mittlere Aggregatfläche und der mittlere Aggregatumfang kleiner als in den Siliciumdioxidpulvern aus den erfindungsgemäßen Beispielen, jedoch ist die Benetzungszeit länger und die Verdickungswirkung geringer.

Die Beispiele 1 bis 5 zeigen weiterhin, wie ein bestimmter enger Bereich der adiabaten Flammentemperatur, hier von 1671°C bis 1708°C, durch Variation der Einsatzstoffmengen erhalten werden kann.

Weiterhin zeigen die Vergleichsbeispiele 6 und 7, dass bei gleicher Zusammensetzung der Siliciumverbindungen wie im Beispiel 1, keine erfindungsgemäßen Siliciumdioxidpulver erhalten werden. Die erhaltenen Pulver weisen BET-Oberflächen ausserhalb des beanspruchten Bereiches auf. In den Vergleichsbeispielen 6 und 7 sind die adiabaten Flammtemperaturen ausserhalb des beanspruchten Bereiches.

In den Vergleichsbeispielen 8 bis 10 sind zwar die adiabaten Flammentemperaturen innerhalb des beanspruchten Bereiches, jedoch werden keine erfindungsgemäßen Siliciumdioxidpulver erhalten:

In den Beispielen 8 bis 10 ist die Zusammensetzung der Siliciumverbindungen ausserhalb des beanspruchten Bereiches. Wie der Tabelle 4 zu entnehmen ist, werden Pulver erhalten, deren mittlere Aggregatflächen, mittlere ECD, mittlere Aggregatumfänge, mittlere maximale Aggregatdurchmesser und mittlere minimale Aggregatdurchmesser größer sind als die der erfindungsgemäßen Siliciumdioxidpulver.

In Beispiel 11 ist das Verhältnis Sekundärluft/Primärluft mit 4,08 ausserhalb des beanspruchten Bereiches. Das erhaltene Siliciumdioxidpulver weist eine BET-Oberfläche weit ausserhalb des beanspruchten Bereiches auf.

Die Silicondichtmasse, welche die erfindungsgemäßen Siliciumdioxidpulver enthalten, weisen eine gute bis sehr gute Dispergierbarkeit im Siliconpolymer auf. Die Oberflächenbeschaffenheit der Silikondichtmasse ist ebenfalls gut bis sehr gut. Die Beurteilung erfolgt visuell, wobei 1 = sehr gut, 2 = gut, 3 = befriedigend, 4 = ausreichend ist.

**Tabelle 2: Einsatzstoffe und Einsatzmengen**

| | | **gemäß Erfindung** | | | | | **Vergleich** | | | | | |
|---|---|---|---|---|---|---|---|---|---|---|---|---|
| **Beispiel** | | **1** | **2** | **3** | **4** | **5** | **6** | **7** | **8** | **9** | **10** | **11** |
| Siliciumtetrachlorid | kg/h | 100 | 100 | 168 | 98 | 9 | 100 | 100 | 170 | 10 | 100 | 9 |
| 2. Siliciumkomponente ^{($)} | kg/h | TCS 5 | MTCS 50 | TCS 30 | MTCS 60 | PTS 1 | MTCS 50 | MTCS 50 | 0 | PTS 100 | TCS 5 | PTS 1 |
| 3. Siliciumkomponente^{($)} | kg/h | MTCS 35 | 0 | 0 | 0 | 0 | 0 | 0 | 0 | 0 | MTCS 35 | 0 |
| Wasserstoff | Nm³ / h | 35 | 40 | 70 | 48 | 3,2 | 35 | 45 | 66 | 9 | 35 | 6,2 |
| Primärluft | Nm³ / h | 155 | 185 | 240 | 265 | 5 | 185 | 185 | 175 | 535 | 180 | 4,9 |
| Sekundärluft | Nm³ / h | 25 | 36 | 15 | 15 | 10 | 36 | 36 | 36 | 36 | 0 | 20 |
| Sekundärluft/ Primärluft | | 0,16 | 0, 19 | 0,06 | 0,06 | 2 | 0,19 | 0, 19 | 0,21 | 0,07 | - | 4,08 |
| Eingangstemperatur (*) | °C | 90 | 90 | 90 | 90 | 90 | 90 | 90 | 90 | 90 | 90 | 90 |
| V_{Brenner} ⁽⁺⁾ | m/s | 29,6 | 34,2 | 46,6 | 46,3 | 33,7 | 33,6 | 34,9 | 36,7 | 47,9 | 33,2 | 36,3 |

| | | | | | | | | | | | | |
|---|---|---|---|---|---|---|---|---|---|---|---|---|
| (*) Für Gemisch aus H₂, Primärluft SiCl₄, 2. und ggf. 3. Siliciumkomponente ($) MTCS = Methyltrichlorsilan; TCS = Trichlorsilan; DCS = Dichlordisilan, MTS = Methyltrichlorsilan; (+) = Austrittsgeschwindigkeit aus Brenner | | | | | | | | | | | | |

**Tabelle 3: Reaktionsenthalpie, Wärmekapazität und adiabate Flammentemperatur**

| | | **gemäß Erfindung** | | | | | **Vergleich** | | | | | |
|---|---|---|---|---|---|---|---|---|---|---|---|---|
| **Beispiel** | | **1** | **2** | **3** | **4** | **5** | **6** | **7** | **8** | **9** | **10** | **11** |
| Summe Reaktionsenthalpien der Teilreaktionen | KW | -192,0 | -228,6 | -273,2 | -269,4 | -15,9 | -213,6 | -243,6 | -235,9 | -452,2 | -192,0 | -24,9 |
| Wärmekapazität Produkte | KJ/ S-K | 0,12 | 0,14 | 0,17 | 0,17 | 0,01 | 0,14 | 0,14 | 0,14 | 0,28 | 0,12 | 0,02 |
| adiabate Flammtemperatur | °C | 1706 | 1708 | 1698 | 1671 | 1707 | 1620 | 1794 | 1724 | 1680 | 1717 | 1722 |

**Tabelle 4 : Analytische Daten der Siliciumdioxidpulver**

| | | **gemäß Erfindung** | | | | | **Vergleich** | | | | | | | |
|---|---|---|---|---|---|---|---|---|---|---|---|---|---|---|
| **Beispiel** | | **1** | **2** | **3** | **4** | **5** | **6** | **7** | **8** | **9** | **10** | **11** | **12^{($)}** | **13^{(&)}** |
| BET-Oberfläche | m²/g | 152 | 162 | 148 | 159 | 153 | 187 | 108 | 154 | 146 | 152 | 153 | 148 | 153 |
| mittl. Aggregatfläche | nm² | 15751 | 12610 | 14352 | 16814 | 19651 | n.b. | n.b. | 21030 | 14357 | 23541 | 22145 | 12203 | 20034 |
| mittl. ECD | nm | 119 | 104 | 115 | 117 | 120 | n.b. | n.b. | 135 | 112 | 152 | 126 | 106 | 131 |
| mittl. Aggregatumfang | nm | 1334 | 1299 | 1213 | 1401 | 1651 | n.b. | n.b. | 1685 | 1288 | 1851 | 1754 | 1045 | 1517 |
| mittl. max. Aggregat-0 | nm | 223 | 198 | 195 | 204 | 211 | n.b. | n.b. | 252 | 209 | 261 | 253 | 195 | 248 |
| mittl. min. Aggregat-0 | nm | 137 | 123 | 128 | 139 | 152 | n.b. | n.b. | 158 | 129 | 170 | 161 | 121 | 153 |
| mittl. Primärpartikel-Ø | nm | 13 | 11 | 12 | 13 | 11 | n.b. | n.b. | 14 | 12 | 16 | 15 | 13 | 15 |
| C-Gehalt | ppm | 6 | 9 | 9 | 10 | 9 | 11 | 4 | 1 | 10 | 11 | n.b. | n.b. | n.b. |
| C1-Gehalt | ppm | 14 | 12 | 8 | 12 | 16 | n.b. | n.b. | n.b. | n.b. | n.b. | n.b. | n.b. | n.b. |
| Verdickung | Pas | 135 | 135 | 132 | 127 | 132 | n.b. | n.b. | 121 | 117 | 151 | 137 | 108 | 130 |
| Benetzungszeit | sec | 88 | 184 | 114 | 152 | 104 | n.b. | n.b. | 288 | 651 | 1152 | 887 | 1253 | 938 |
| Dispergierbarkeit in Silicon | | 1,5 | 1, 5 | 1,5 | 1,5 | 2,5 | n.b. | n.b. | 1,5 | 1,5 | 2 | 2, 5 | 2 | 2 |
| Oberfächenbeschaffenheit | | 1,5 | 1,5 | 1,5 | 2 | 1,5 | n.b. | n.b. | 1,5 | 2,5 | 3 | 2,5 | 3,5 | 1,5 |

| | | | | | | | | | | | | | | |
|---|---|---|---|---|---|---|---|---|---|---|---|---|---|---|
| $: N15, Wacker; &: Cabosil LM-50'; n.b. = nicht bestimmt | | | | | | | | | | | | | | |

## Patentansprüche

1. Pyrogen hergestelltes Siliciumdioxidpulver, in Form von Aggregaten von Primärpartikeln,
**dadurch gekennzeichnet,**
**dass**
- es eine BET-Oberfläche von 150 ± 15 m²/g besitzt und die Aggregate
- eine mittlere Fläche von 12000 - 20000 nm²,
- einen mittleren, äquivalenten Kreisdurchmesser (ECD = Equivalent Circle Diameter) von 90 - 120 nm und
- einen mittleren Umfang von 1150 - 1700 nm aufweisen.

2. Pyrogen hergestelltes Siliciumdioxidpulver nach Anspruch 1,
**dadurch gekennzeichnet,**
**dass** die Aggregate
- eine mittlere Fläche von 12500 - 14500 nm²,
- einen mittleren, äquivalenten Kreisdurchmesser von 95 - 110 nm und
- einen mittleren Umfang von 1250 - 1450 nm aufweisen.

3. Pyrogen hergestelltes Siliciumdioxidpulver nach den Ansprüchen 1 oder 2,
**dadurch gekennzeichnet,**
**dass** der maximale Aggregatdurchmesser zwischen 170 und 240 nm und der minimale Aggregatdurchmesser zwischen 100 und 160 nm liegt.

4. Pyrogen hergestelltes Siliciumdioxidpulver nach den Ansprüchen 1 bis 3,
**dadurch gekennzeichnet,**
**dass** der Chloridgehalt kleiner als 250 ppm ist.

5. Pyrogen hergestelltes Siliciumdioxidpulver nach den Ansprüchen 1 bis 4,
**dadurch gekennzeichnet,**
**dass** der Kohlenstoffgehalt kleiner als 100 ppm ist.

6. Verfahren zur Herstellung des Siliciumdioxidpulvers gemäß den Ansprüchen 1 bis 5,
**dadurch gekennzeichnet,**
**dass** man
- ein Gemisch von Siliciumverbindungen, getrennt oder gemeinsam, verdampft, die Dämpfe mittels eines Traggases in eine Mischkammer überführt, mit
- SiCl₄ als erster Komponente mit einem Anteil 60 bis 95 Gew.-% bezogen auf das Gemisch, und
- einer zweiten Komponente ausgewählt aus der Gruppe umfassend H₃SiCl, H₂SiCl₂, HSiCl₃, CH₃SiCl₃, (CH₃)₂SiCl₂, (CH₃)₃SiCl, (n-C₃H₇) SiCl₃, mit einem Anteil von 5 bis 40 Gew.-%, bezogen auf das Gemisch,
- und getrennt hiervon ein Brenngas, Primärluft, die gegebenenfalls mit Sauerstoff angereichert und/oder vorerhitzt sein kann, in die Mischkammer überführt,
- das Gemisch aus dem Dampf der Siliciumchloride, Brenngas und Primärluft in einem Brenner zündet und die Flamme in eine Reaktionskammer hinein verbrennt,
- Sekundärluft, die die Flamme umgibt, in die Reaktionskammer einbringt, wobei das Verhältnis von Sekundärluft/Primärluft in einem Bereich von 0,05 bis 3, bevorzugt 0,15 bis 2, liegt,
- anschließend den Feststoff von gasförmigen Stoffen abtrennt, und nachfolgend den Feststoff mit Wasserdampf bei 250°C bis 750°C behandelt,
wobei
- die Gesamtmenge an Sauerstoff mindestens ausreichend ist zur vollständigen Verbrennung des Brenngases und der Siliciumverbindungen und
- die Menge der Einsatzstoffe bestehend aus Siliciumverbindungen, Brenngas, Primärluft und Sekundärluft so gewählt ist, dass eine adiabate Flammentemperatur T_{ad} von 1670 bis 1730°C resultiert, mit
T_{ad} = Temperatur Einsatzstoffe + Summe der Reaktionsenthalpien der Teilreaktionen /Wärmekapazität der Stoffe, die die Reaktionskammer verlassen, umfassend Siliciumdioxid, Wasser, Chlorwasserstoff, Kohlendioxid Sauerstoff, Stickstoff, und gegebenenfalls des Traggases, wenn dieses nicht Luft oder Stickstoff ist,
wobei die spezifische Wärmekapazität dieser Stoffe bei 1000°C zugrunde gelegt wird.

7. Verfahren nach Anspruch 6,
**dadurch gekennzeichnet,**
**dass** die Temperatur der Einsatzstoffe 90°C ± 40°C ist.

8. Verfahren nach den Ansprüchen 6 oder 7,
**dadurch gekennzeichnet,**
**dass** die Austrittsgeschwindigkeit des Reaktionsgemisches aus der Mischkammer in die Reaktionskammer 10 bis 80 m/s ist.

9. Verwendung des pyrogen hergestellten
Siliciumdioxidpulvers gemäß der Ansprüche 1 bis 5 als Füllstoff in Kautschuk und Kunststoffen, zur Einstellung der Rheologie in Farben und Lacken, als Träger für Katalysatoren und zur Herstellung von Dispersionen.

## Claims

1. Fumed silica powder in the form of aggregates of primary particles,
**characterized in that**
- it has a BET surface area of 150 ± 15 m²/g, and the aggregates have
- a mean area of 12 000 - 20 000 nm²,
- a mean equivalent circle diameter (ECD) of 90 - 120 nm and
- a mean circumference of 1150 - 1700 nm.

2. Fumed silica powder according to Claim 1,
**characterized in that**
the aggregates have
- a mean area of 12 500 - 14 500 nm²,
- a mean equivalent circle diameter of 95 - 110 nm and
- a mean circumference of 1250 - 1450 nm.

3. Fumed silica powder according to Claim 1 or 2,
**characterized in that**
the maximum aggregate diameter is between 170 and 240 nm and the minimum aggregate diameter is between 100 and 160 nm.

4. Fumed silica powder according to Claims 1 to 3,
**characterized in that**
the chloride content is less than 250 ppm.

5. Fumed silica powder according to Claims 1 to 4,
**characterized in that**
the carbon content is less than 100 ppm.

6. Process for producing the silica powder according to Claims 1 to 5,
**characterized in that**
- a mixture of silicon compounds is evaporated separately or together, the vapours are transferred to a mixing chamber by means of a carrier gas, comprising
- SiCl₄ as a first component with a proportion of 60 to 95% by weight, based on the mixture, and
- a second component selected from the group comprising H₃SiCl, H₂SiCl₂, HSiCl₃, CH₃SiCl₃, (CH₃) ₂SiCl₂, (CH₃)₃SiCl, (n-C₃H₇)SiCl₃, with a proportion of 5 to 40% by weight, based on the mixture,
- and, separately therefrom, a combustion gas, primary air which may optionally be enriched with oxygen and/or preheated, is transferred into the mixing chamber,
- the mixture of the vapour of the silicon chlorides, combustion gas and primary air is ignited in a burner and the flame burns into a reaction chamber,
- secondary air which surrounds the flame is introduced into the reaction chamber, the ratio of secondary air/primary air being within a range from 0.05 to 3, preferably 0.15 to 2,
- then the solid is removed from gaseous substances, and then the solid is treated with steam at 250°C to 750°C,
where
- the total amount of oxygen is at least sufficient for full combustion of the combustion gas and of the silicon compounds and
- the amount of the feedstocks consisting of silicon compounds, combustion gas, primary air and secondary air is selected so as to result in an adiabatic flame temperature T_{ad} of 1670°C to 1730°C,
where
T_{ad} = feedstock temperature + sum of the reaction enthalpies of the component reactions/heat capacity of the substances which leave the reaction chamber, comprising silica, water, hydrogen chloride, carbon dioxide, oxygen, nitrogen, and optionally the carrier gas if it is not air or nitrogen,
based on the specific heat capacity of the substances at 1000°C.

7. Process according to Claim 6,
**characterized in that**
the temperature of the feedstocks is 90°C ± 40°C.

8. Process according to Claim 6 or 7,
**characterized in that**
the exit velocity of the reaction mixture from the mixing chamber into the reaction chamber is 10 to 80 m/s.

9. Use of the fumed silica powder according to Claims 1 to 5 as a filler in rubber and plastics, for adjusting rheology in paints and coating materials, as a support for catalysts and for production of dispersions.

## Revendications

1. Poudre de silice produite par pyrogénation, sous forme d'agrégats de particules primaires, **caractérisée en ce qu'**elle présente
- une surface BET de 150 ± 15 m²/g et les agrégats présentent
- une surface moyenne de 12 000 - 20 000 nm²,
- un diamètre de cercle équivalent (ECD = Equivalent Circle Diameter) moyen de 90 - 120 nm et
- une circonférence moyenne de 1 150 - 1 700 nm.

2. Poudre de silice produite par pyrogénation, selon la revendication 1, **caractérisée en ce que** les agrégats présentent
- une surface moyenne de 12 500 - 14 500 nm²,
- un diamètre de cercle équivalent moyen de 95 - 110 nm et
- une circonférence moyenne de 1 250 - 1 450 nm.

3. Poudre de silice produite par pyrogénation, selon la revendication 1 ou 2, **caractérisée en ce que** le diamètre maximum d'agrégat est compris entre 170 et 240 nm et le diamètre minimum d'agrégat est compris entre 100 et 160 nm.

4. Poudre de silice produite par pyrogénation, selon les revendications 1 à 3, **caractérisée en ce que** la teneur en chlore est inférieure à 250 ppm.

5. Poudre de silice produite par pyrogénation, selon les revendications 1 à 4, **caractérisée en ce que** le teneur en carbone est inférieure à 100 ppm.

6. Procédé pour la production de la poudre de silice selon les revendications 1 à 5, **caractérisé en ce que**
- on vaporise un mélange de composés siliciés, séparément ou ensemble, on transfère les vapeurs, au moyen d'un gaz vecteur, dans une chambre de mélange, avec
- du SiCl₄ en tant que premier composant, en une proportion de 60 à 95 % en poids, par rapport au mélange, et
- un second composant choisi dans le groupe comprenant H₃SiCl, H₂SiCl₂, HSiCl₃, CH₃SiCl₃, (CH₃)₂SiCl₂, (CH₃) 3SiCl, (n-C₃H₇)SiCl₃, en une proportion de 5 à 40 % en poids, par rapport au mélange,
- et séparément de ceux-ci, on transfère dans la chambre de mélange un gaz combustible, de l'air primaire, qui peut éventuellement être enrichi avec de l'oxygène et/ou préchauffé,
- on allume dans un brûleur le mélange composé de la vapeur des chlorures de silicium, du gaz combustible et d'air primaire et la flamme brûle à l'intérieur d'une chambre de réaction,
- on introduit dans la chambre de réaction de l'air secondaire qui entoure la flamme, de sorte que le rapport air secondaire/air primaire se situe dans une plage allant de 0,05 à 3, de préférence de 0,15 à 2,
- on sépare ensuite le solide des substances gazeuses et ensuite on traite le solide par de la vapeur d'eau à 250°C - 750 °C,
- la quantité totale d'oxygène étant au moins suffisante pour la combustion totale du gaz combustible et des composés siliciés et
- la quantité des substances de départ, consistant en composés siliciés, gaz combustible, air primaire et air secondaire étant choisie de manière qu'il en résulte une température de flamme adiabatique T_{ad} de 1 670 à 1 730 °C, où
T_{ad} = température des substances de départ + somme des enthalpies de réaction des réactions partielles / capacité calorique des substances qui quittent la chambre de réaction, comprenant silice, eau, chlorure d'hydrogène, dioxyde de carbone, oxygène, azote, et éventuellement du gaz vecteur, lorsque celui-ci n'est pas l'air ni l'azote,
la capacité calorique spécifique de ces substances à 1 000 °C étant prise pour base.

7. Procédé selon la revendication 6, **caractérisé en ce que** la température des substances de départ est 90°C ± 40°C.

8. Procédé selon la revendication 6 ou 7, **caractérisé en ce que** la vitesse de sortie du mélange réactionnel sortant de la chambre de mélange pour pénétrer dans la chambre de réaction est de 10 à 80 m/s.

9. Utilisation de la poudre de silice produite par pyrogénation selon les revendications 1 à 5, en tant que charge dans du caoutchouc et des matières plastiques, pour l'ajustement de la rhéologie dans des peintures et vernis, comme support pour catalyseurs et pour la préparation de dispersions.
